# NEW EUROPEAN PATENT SPECIFICATION

(11) **EP 0 122 104 B2**
(45) Date of publication and mention of the opposition decision: **16.02.1994**
(45) Mention of the grant of the patent: 28.06.1989
(21) Application number: 84302251.8
(22) Date of filing: 02.04.1984
(51) Int. Cl.: A23C 9/123, A23C 19/032, A23C 19/076, A23C 9/133

(54) **Multi-cultured yogurt, solid spread and cottage cheese**
Multi-gesäuerter Joghurt, festes Aufstrichmittel und Frischkäse
Yaourt, produit à tartiner solide et fromage blanc multi-fermentés

(30) Priority: 06.04.1983 US 482468
(43) Date of publication of application: 17.10.1984
(73) Proprietor: Roberts, James Gordon, Belleair Florida 33516 (US)
(72) Inventor: Roberts, James Gordon, Belleair Florida 33516 (US)
(74) Representative: McCallum, William Potter

(56) References cited:
- GB-A- 1 043 194
- US-A- 3 506 456
- US-A- 4 034 115
- US-A- 4 091 117
- J. DAVIS: "CHEESE", vol. III, 1976, Churchill Livingstone, LONDON, GB, pages 628-637
- Dairy Science Abstracts, Vol. 28, no. 6, paragraph nr. 1783; GIRGINOV T.A. and GRUEV P.V.
- Yoghurt, Scientific Grounds, Technology, Manufacture and Preparations, by J. Rasic and J.Kurmann, Technical Dairy Publishing House, Copenhage, 1978
- Deutsche Milchwirtschaft, 8/1982
- H.G. Schlegel, Allgemeine Mikrobiologie, 5, Auflage 1982, Georg Thieme Verlag
- Basic Food Microbiology, G.J. Banwart, 1989
- Cheese and Fermented Milk Foods, F. Kosikowski, 1970

## Description

This invention relates to fermented or cultured dairy products and the process for their manufacture wherein various microorganisms are used to alter the composition of milk to make a more palatable and healthful product. Particularly, the area of invention is directed to the art of making yogurt or a solid spreadable food product or cottage cheese by employing different microorganisms in sequential fermentation stages. More particularly, the invention relates to various methods for preparing dairy products containing *Bibidobacterium bifidum.*

Man's knowledge of yogurt making goes back to ancient times; as a consequence, little is known concerning the actual origin of yogurt. It is known, however, that yogurt was first used in the Middle East or Asia-Minor. Supposedly, yogurt was discovered by nomadic herdsmen who carried milk in a vessel made from a sheep's stomach. It was later found to be that the sheep's stomach was the natural habitat of the yogurt-making microorganisms. The domain of the herdsman was the desert and consequently the milk contents was exposed to alternate rapid heating and rapid cooling. During the heat of the day, the microorganisms would multiply rapidly and convert the disaccharide sugar or lactose into glucose and galactose. In the cool of the night, the microbial action would be brought to a halt leaving a custard-like substance. The early herdsmen learned that this yogurt was more digestible than the milk from which it originated. Later it was discovered that the yogurt making process could be carried out in earthenware vessels if a small amount of yogurt was used to begin the process anew.

The yogurt of ancient times was very much different from what is now known as yogurt. It was not until the yogurt-making microorganisms were identified that pure yogurt could be manufactured. United States Patent No. 1,710,133 to Winkler discloses that the use of pure *Lac**tobacillus bulgaricus* to culture milk provides a far more palatable food product and avoids the problems associated with using impure substances. Winkler also teaches the importance of single fermentation in the production of yogurt.

Preparation of the microorganism cultures used to ferment milk is discussed in United States Patent No. 3,480,443 to Schuler. The Schuler process also emphasises the method of single culturing.

The advantage of yogurt or fermented dairy products over milk is that the microorganisms convert substantial quantities of lactose, or milk sugar, into glucose. Lactose is not readily digested by most humans and must first be converted to glucose and galactose, usually in the stomach. Although the yogurt making process will achieve some lactose conversion much lactose still remains present. It was to this problem that my prior invention, disclosed in United States Patent No. 4,034,115, was directed.

According to my prior invention, skim milk, ordinary milk, with or without non-fat milk solids, is raised to a temperature suitable for the culturing process and inoculated with lactose-forming bacteria cultures used in the production of ordinary buttermilk. Fermentation is allowed to continue until the lactose is hydrolyzed as fully as possible into glucose and galactose. At this point where approximately 80 percent of the lactose remains the mixture is then inoculated a second time with yogurt-making bacteria and allowed to ferment. The second fermentation further reduces the lactose and is allowed to continue until the curd starts to separate from the whey. The substance is then allowed to cool and thereupon small amounts of colostrum are added. The mixture is then inoculated a third time and allowed to ferment completing the transformation of the lactose as fully as possible.

My prior invention, though offering substantial improvements over the prior art, had some disadvantages with regard to the production of a commercially practicable product. My prior invention required three or more fermentations whereas the method of the present invention requires only two. Moreover, the restricted availability of colostrum places severe limitations on the quantity of product that can be produced by the method of my prior invention. Not only does my present invention result in a simpler method of manufacture, it eliminates the need for colostrum and the third fermentation step, but it also has the advantage of producing a more flavorful product than was achieved by my prior invention. Not only does my present invention remove lactose in substantial quantities, but accomplishes that goal by improving the nutritional content of the substance.

This invention relates to a multi-cultured milk product with an acceptable and palatable flavor and the processes for their preparation. More specifically, this invention relates to a unique multi-cultured milk product and a process that reduces the disaccharide sugar or lactose more completely than heretofore thought possible thereby increasing the amount of glucose and galactose. Prior milk products that have been prepared by multiple fermentation have used either alcohol or heat during the preparation which have the effect of hindering the enzymatic transformation of lactose to glucose and galactose. The use of alcohol in a milk product through some form of fermentation with yeast inhibits some of the enzymes normally present in milk and produces food of lessened nutritional content. Moreover, some people are allergic to the lactose in milk itself and are, therefore, denied the benefits of a milk product. For millions of people, intolerance develops during the life cycle such that they are unable to easily digest lactose, a condition that is believed to arise from the deficiency of B-galactosidase in the intestinal microville.

Previously, bacteria used as starters for culturing various types of milk-based products have included spherical types such as Streptococcus lactis, Streptococcus cremoris, Leucononostoc citrovorum, Streptococcus diacetilactis, and Streptococcus durans which are used primarily for buttermilk and sour cream while rod-shaped types such as Lactobacillus bulgaricus, Lactobacillus heleveticus, Lactobacillus lactis, Lactobacillus acidophilus, Actinomyuces bifidus, and Doderlein's bacillus are used primarily for yogurt-like products. However, such milk-based products generally have a lactose content after one culturing still higher than it need be.

In previously developed processes, the lactose was broken down by various fermentation processes converting the lactose into lactic acid as when milk with or without non-fat milk solids, partly skim milk or skim milk or skim milk is changed into yogurt or buttermilk; however, over 80 percent of the disaccharide sugar may remain unspent after the buttermilk and sour cream fermentation is completed. Further efforts to remove the lactose have resulted in the past in lowering the nutritional value of the milk product or producing products that are unpalatable.

It has also been incorrectly assumed that cultures must be balanced when used together. One culture will reach a peak at which curd starts to separate from the whey. At this point, the addition of different varieties of souring cultures will produce new curdling as though no souring had occurred when the product is brought to a temperature suitable for optimal growth. Here, temperature is the controlling factor.

An inexpensive process to produce milk products digestible to the multitude of people who cannot drink it would have far-reaching effects, particularly if substantial quantities of lactose can be transformed without altering the nutritional value of the milk products, except to improve it.

The therapeutic value of inoculating milk with various strains of microorganisms has been reported by numerous authorities to be particularly important for maintaining good intestinal metabolism and health. Three species of such microorganism cultures include *Bifidobacterium* *bifidum, L. acidophilus,* and *L. bulgaricus. L.* *bulgaricus* is used in the production of yogurt and is believed to prolong human life by inhibiting the growth of proteolytic microbes in the intestinal tract; however, the culture will not survive in the digestive tract for prolonged periods of time. *L.* *acidophilus* and *B. bifidum,* on the other hand, are known to be able to retain their viability through the digestive tract, displacing proleolytic bacteria completely, thus affording a means of implantation in the lower intestinal tract. Both cultures have the capabilities of maintaining a normal microbiological balance, particularly in the intestinal flora, suppressing many undesirable organisms while promoting a beneficial metabolism, *L.* *acidophilus* is completely non-pathogenic and offers an entirely safe, therapeutic regimen.

Until a few years ago, the beneficial effects resulting from the ingestion of *L. acidophilus* in cases of gastrointestinal disturbances were attributed to the simple outgrowth of the offending pathogen by the lactobacilli. Recently, a number of workers established that there is more to the reaction than just competition between strains. A by-product produced by *L. acidophilus* has been called variously antagonist (White and Hall, J. Dental Res. 48272, 1949); lactobacillin (Vincent et al., ATE Nature 168, 659, 1951); lactocidin (Vincent et al., J. Bact. 78, 479, 484, 1959); and antibiotic (Shahani et al., U.S. Pat. No. 3,689,640).

The form in which *L. acidophilus* has been usually employed to obtain its therapeutic effect has been as fermented milk. The number of viable organisms in acidophilus milk was usually in the order of 250 million per milliliter which produced a highly unpalatable product. In addition, the product had a relatively short useful life, usually limited to less than two weeks, which often created problems in distribution and handling. Moreover, the processing of such fermented milk as compared with ordinary milk was extremely expensive.

The beneficial effects of *B.* *bifidum* have also been recently reported (The Milk Industry, September, 1973). Here, it has been established that *B. bifidum* forms a substantial proportion of the intestinal flora of babies and performs an inhibiting effect on pathogenic bacteria and the growth of anaerobic putrefactive microorganisms in the intestinal tract.

Various processes that have been developed to prepare a multi-cultured milk product of this type have involved using yeast or alcohol which must necessarily interfere with the antibiotic effect of the bacteria since alcohol destroys bacteria. Various yogurt-type products, as distinguished from ordinary dairy yogurt, have been produced by either a mixing together of separate fermented products such as in United States Patent No. 1,889,817 (Matt) issuing on February 28, 1933; high heat treatment as in United States Patent No. 2,119,599 (Nordsiek) issuing on June 7, 1938; or alcoholic fermentation as in United States Patent No. 2,842,804 (Mishima) issuing on February 25, 1958. None of these processes, however, produces a palatable product, and attempts to improve the flavor have not been satisfactory.

The addition of flavors and sugar, particularly fresh fruits and berries, to the mixes undergoing the incubation stage has met with disfavor in that the incubation conditions have caused loss of flavor and color in the flavoring additives. Moreover, because the digestion of fruits and milk involve different enzymes and different digestive processes, such mixing may involve enzymatic and other conflicts ruining any such mixture as a health food. Other processing attempts have resulted in poorly controlled growth conditions which yield inferior quality taste, poor shelf life, as well as substantially altering the nutritional value of the milk product.

It is the purpose of this invention to provide a new nutritional and therapeutic milk product made by a multi-culturing process that will significantly reduce the unspent lactose after a yogurt-type fermentation is completed and produce a product that is tasteful and can be digested by persons having an intolerance for lactose, besides being more easily digested by anyone.

Another basic purpose of this invention is to provide a food product, pleasing to the taste, to act as a vehicle for the ingestion of L. acidophilus and B.bididum.

The present invention provides a method of producing a multi-cultured food product which comprises:
a. producing separately a first culture wherein said culture comprises Lactobacillus bulgaricus or Streptococcus thermophilus;
b. producing separately a second culture wherein said culture comprises Bifidobacterium bifidum or Lactobacillus acidophilus;
c. mixing in a mixing tank cream, milk, partially skimmed milk and skim milk, alone or in combination where concentrated skim milk, non-fat dry milk or other milk derived ingredients are used to standardize milk-solids-to-fat;
d. treating the mixture of step (c) so as to produce a pasteurized prepared mixture at a fermentation temperature in the range of about 40°C to about 50°C;
e. inoculating the prepared mixture with the first culture to produce a prepared milk fluid;
f. fermenting the prepared milk fluid at a temperature in the range of about 40°C to about 50°C for a time sufficient enough that an amount of lactic acid is generated to produce a first fully cultured product;
g. cooling the first cultured product to a temperature in the range of about 35°C to about 39°C;
h. inoculating the cooled first cultured product with the second culture to produce a second cultured product; and
i. fermenting the second cultured product for a time sufficient to reduce the pH by about 0.5 and produce a palatable and healthful multi-cultured food product.

This invention depends upon the finding that commercial cultured yogurt ordinarily considered to be fully cultured may be cultured further through the use of Bifidobacterium bifidum, and/or other Lactobacilli and that yogurt considered to be fully cultured by L. bulgaricus and S. thermophilus at about 40°C to about 46°C may be cultured still further by the addition of Bifidobacterium bifidum and/or other Lactobacilli to reduce pH while breaking down lactose and increasing lactase. The foregoing represents a radical departure from the ordinary art of making cultured dairy products.

An advantage of re-culturing beyond usual culturing is the result of an additional breakdown of lactose into monosaccharides, thus making the product still more digestible for those individuals allergic to milk.

A further advantage of this invention is that multi-culturing with Bifidobacterium bifidum introduces more anaerobic bacteria which may survive in the digestive tract, a quality considered desirable by many doctors.

A fundamental function of this invention is to culture what is considered a fully cultured food product still further into a multi-cultured food product. The multi-culturing process, as described in this patent, breaks down lactose in milk (or milk sugar) into glucose and galactose, while enhancing the amount of the enzyme lactase in the finished product. Lactase is an enzyme found in limited quantity in raw milk, but is destroyed by pasteurization, and thus conceivably produces a dietary shortage of lactase. The multi-culturing process of this invention, more fully than by any other method yet offered, overcomes this lactose shortage and yet maintains the flavor advantages of yogurt, or of cottage cheese.

Other objects of the invention will be apparent from the following discussion and description of this invention.

Multi-cultured buttermilk or yogurt may also be used in the preparation of multi-cultured cottage cheese in a manner described herein.

The general method of the present invention is comprised of numerous sequential steps. Initially, a first and a second culture are produced separately. The first culture is comprised of *Lac**tobacillus bulgaricus* or *Streptococus ther**mophilus,* which is the standard culture used in the manufacturing of yogurt. The second culture is comprised of *Bifidobacterium bifidum* or *Lac**tobacillus acidophilus* or any other fermentive substance such as a lactic acid producing microorganism. By stating the composition of the first and second cultures as an alternative combination it is intended to include those compositions comprised of a single microorganism or the microorganism pair. These are intended merely as alternative embodiments. In the preferred embodiment, however, the first culture is comprised of equal cell counts of *L. bulgaricus* and *S.* *thermophilus.* As is common in the art, the cultures would be produced in advance of the actual time it is intended to make the multi-cultured milk product.

In the first step of the actual process, milk or milk products such as cream, partially skimmed milk and skim milk are combined in a mixing tank with concentrated skim milk, non-fat dry milk or other milk derived ingredients used to standardize milk-solids-not-fat.

In the second step the combined ingredients in the mixing tank are mixed thoroughly. The mixing step can be accomplished mechanically or in conjunction with the pasteurization step that follows. Pasteurization may be accomplished in any of the methods well known in the art. In one embodiment of the invention, however, it should be noted that the pasteurization step can be entirely avoided, as is subsequently explained, because the successive fermentation steps achieve sufficient destruction of the harmful entities usually destroyed in the pasteurization process to render a very healthful product.

After the mixing and pasteurization steps are completed, if pasteurization is desired the entire mixture is cooled to a first fermentation temperature in the range of about 40°C to about 50°C. After the mixture reaches the desired temperature it is innoculated with the first culture initiating a first fermentation. The first fermentation is allowed to continue at the first fermentation temperature for a time sufficient enough that an amount of lactic acid is generated to produce a first cultured product.

The first cultured product is then cooled to a second fermentation temperature in the range of about 35°C to about 39°C. When the first cultured product is sufficiently cooled and thus arresting any further activity of the first culture the first cultured product is innoculated with the second culture to initiate a second fermentation and produce a second cultured product. The second fermentation is allowed to continue at the second fermentation temperature for a time sufficient enough to produce a palatable and healthful multi-cultured food product.

Yogurt is generally made from a mix standardized from whole, partially defatted milk, condensed skim milk, cream and nonfat dry milk. Alternatively, milk may be partly concentrated by removal of about 15% to about 20% water in a vacuum pan. Supplementation of milk-solids-non-fat (MSNF) with nonfat dry milk is the preferred industrial procedure. All dairy raw materials should be of a high bacteriological quality, ingredients containing mastitis milk and rancid milk should be avoided. Milk partially fermented with contaminant organisms, or milk containing antibiotic and sanitizing chemical residues cannot be used for yogurt production as it interferes with the activity of the beneficial microorganisms.

The milk fat levels in yogurt range from about 1.00% to about 3.25%. The proposed federal standards of identity (Federal Register 1977) define the product in three categories. The product containing a minimum of 3.25% milk fat is called yogurt. Low-fat yogurt contains not less than 0.5% and not more than 2% milk fat. The product containing less than 0.5% milk fat is labeled as nonfat yogurt. In all the categories of yogurt, a MSNF minimum of 8.25% and a titratable acidity minimum of 0.5% lactic acid is required.

The ingredients are: cream, milk, partially skimmed milk and skim milk, alone or in combination. Concentrated skim milk, non-fat dry milk or other milk derived ingredients may be used to standardize MSNF content of the mixture. Presumably, the milk derived ingredients include casein, sodium and calcium caseinates, whey protein concentrates alone or in combination. The use of milk derived ingredients is permitted on the condition that the ratio of protein to total nonfat solids of the food and the protein efficiency ratio of all protein present should not be diminished. Additives permitted are nutritive carbohydrate sweeteners, coloring, stabilizers and fruit preparations for flavoring yogurt. The culture is specified as *Lactobacillus bulgaricus* and *Strep**tococcus thermophilis,* plus *Bifidobacterium* *bifidum, Lactobacillus acidophilus,* or any other Lactobacilli, Lactobacillus or Bifidobacterium used in further culturing.

Nutritive carbohydrates used in the yogurt making process are similar to the sweeteners used in ice cream and other frozen desserts described by Arbuckle (1972). Sucrose is the major sweetener used in yogurt production. Soemtimes, corn sweeteners and honey may also be used. The level of sucrose in the yogurt mixture appears to affect the production of lactic acid and flavor by the yogurt culture. Bills *et al.,* (1972) reported a decrease in acetaldehyde production at 8% or higher concentration of sucrose. Sucrose may be added in a dry, granulated, free-flowing, crystalline form or as a liquid sugar containing 67% sucrose. Liquid sugar is preferred for its handling convenience in large operations. However, storage capability in sugar tanks along with heaters, pumps, strainers and meters is required. The corn sweeteners, primarily dextrose, usually enter yogurt via the processed fruit flavorant in which they are extensively used for enhancing flavor. Corn syrup solids up to a 6% level are usually used in frozen yogurt. Non-nutritive sweeteners (e.g., Ca saccharin) have been used along with maltol to produce a product containing about 50% fewer calories than normal sweetened yogurt.

Lactase has been suggested for hydrolysis of lactose to a sweeter mixture of glucose and galactose in yogurt, thereby reducing the level of sucrose required to achieve a constant degree of sweetness (Kosikowski and Wierzbicki 1971, Engel 1973). Goodenough and Kleyn (1976) investigated qualitative and quantitative changes in yogurt during its manufacture. They reported average lactose concentration of 8.5% in yogurt mix. Upon fermentation, the lactose level dropped to 5.75% with a concommitant increase of 1.20% galactose. Glucose was detected only in trace quantities. Commercial yogurts had, on an average, above 4.0 pH, 4.06% lactose, 1.85% galactose and 0.05% glucose, but multi-cultured yogurt may have a still lower pH.

The primary purpose of using a stabilizer in yogurt is to produce smooth body and texture, impart gel structure and reduce wheying off or syneresis. The stabilizer increases shelf life and provides a reasonable degree of uniformity to the product. Stabilizers function by forming gel structures in water, thereby leaving less free water for syneresis. In addition, some stabilizers complex with casein or milk. A good yogurt stabilizer should not impart any flavor, be effective at low pH values, and should be easily dispersible at the normal working temperature in a dairy plant. The stabilizers generally used in yogurt are gelatin, vegatable gums like carboxymethyl cellulose, locust bean, guar and seaweed gums like alginates and carrageenans (Hall 1975).

Gelatin is derived by irreversible hydrolysis of proteins collagen and ossein; it is used in a level of 0.3% to about 0.5% to get a smooth shiny appearance in refrigerated yogurt. Gelatin is a good stabilizer for frozen yogurt. The term Bloom refers to the gel strength as determined by a Bloom gelometer under standard conditions of the test. Gelatin of Bloom strength 225 or 250 is commonly used. Gelatin level should be directed to the consistency standards of yogurt. Levels above 0.35% tend to impart to yogurt of relatively high milk solids a curdly appearance upon stirring. At temperatures below 10°C, the yogurt acquires a pudding-like consistency. Gelatin tends to degrade at ultra-high temperatures of processing thus its activity is temperature dependent. Yogurt gel is considerably weakened by a rise in temperature. Furthermore, being an animal product of unknown origin, gelatin is generally not acceptable in Kosher yogurts. The seaweed gums impart a desirable viscosity as well as gel structure to yogurt. Algin and sodium alginate are derived from giant sea kelp. Carrageenan is made from Irish moss and compares favorably with 250 Bloom gelatin in stabilizing value. These stabilizers are heat stable and promote stabilization of yogurt gel by complex formation with Ca⁺⁺ and casein. Among the seed gums, locust bean gum or carob gum is derived from the seeds of a leguminous tree. Carob gum is quite effective at low pH levels. Guar gum is also obtained from seeds and is a good stabilizer for yogurt. It is readily soluble in cold water and is not affected by high temperatures used in the pasteurization of the yogurt mixture. Carboxymethyl cellulose is a cellulose product and is effective at high processing temperatures.

The stabilizer system used in yogurt mix preparation is generally a combination of various vegetable stabilizers to which gelatin may or may not be added. Their ratios as well as the final concentration (generally in the range of 0.5% to about 0.7%) in the product are carefully controlled to get desirable effects. Other stabilizers reportedly used are agar and pectin (Humphreys and Plunkett 1969). CaCl₂ may be useful in controlling whey separation (Pette and Lolkema 1951). For a detailed description of various industrial gums, *see* Whistler (1973).

The fruit preparations for blending in yogurt are specially designed to meet the marketing requirements for the type of yogurt. They are generally present at levels of about 15% to about 20% in the final product (Craven 1975). A majority of the fruits contain natural WONF flavors. There are many types of yogurts marketed in the United States, such as but not limited to, Fruit-on-Bottom or Eastern Sundae Style, Western Sundae Style and Swiss Style.

In Fruit-on-Bottom or Eastern Sundae Style Yogurt, 2 oz. of fruit preserves are layered at the bottom followed by 6 oz. of inoculated yogurt mix on the top. No flavorant or sweetener is added to the yogurt. After placing the lids on the cups, incubation and ferementation takes place in the cups. When a desirable pH level in the range of 4.4 to 4.2 is attained in ordinary yogurt (the yogurt of the present invention would be less), the cups are placed in refrigerated rooms for rapid cooling. For consumption, the fruit and yogurt layers are mixed by the consumer. Fruit preserves have a standard of identity. A preserve is made from 55% sugar, and a minimum of 45% fruit by cooking until the final soluble solids content is 68% or higher (65% in the case of certain fruits) (Gross 1974). Frozen fruits and juices are the usual raw material. Commercial pectin, 150 grade, is normally utilized at a level of 0.5% in preserves and the pH is adjusted to a range of 3.0 to about 3.5 with a food grade acid, such as citric acid, during manufacture of the preserves.

In Western Sundae Style Yogurt fruit preserves or special fruit preparations may form the bottom layer. The top layer comprises yogurt containing sweetener, flavorant and food color representing the fruit on the bottom. The flavorant level is usually in the range of about 2% to about 4% in the top layer. In other respects, this yogurt is identical to Eastern Sundae Style.

In Swiss Style Yogurt, also known as Continental Style, French Style and Stirred yogurt, the fruit preparation is thoroughly blended in the yogurt after culturing. Stabilizers are necessary in this form of yogurt unless MSNF levels are relatively high (in the range of about 14% to about 16%). In this style yogurt, cups are filled with the blended yogurt mixture and fruit. Upon refrigerated storage for 48 hours, the clot is reformed to exhibit a fine body and texture. Overstabilized yogurt possesses a solid-like consistency and lacks a refreshing character. Yogurt should not be so thin that it is drinkable; it should melt in the mouth without chewing.

Flavors and certified food colors are usually added for eye appeal and better flavor profile. The fruit base should meet the following requirements; a) exhibit true color and flavor of the fruit when blended with yogurt, b) be easily dispersible in yogurt without causing texture defects, phase separation or syneresis (in this regard the pH of the fruit base should be compatible with the yogurt pH); and c) have a microbiological quality so that yeasts and molds can be controlled in the final product to prevent spoilage and to extend shelf life.

Fruit preserves do not necessarily meet all these requirements, especially flavor, sugar level, consistency and pH. Accordingly, special fruit bases having the following composition are designed for use in stirred yogurt.
- Fruit: about 17% to about 41%
- Sugar: about 22% to about 40%
- Corn syrup solids: about 10% to about 24%
- Modified food starch: about 3.5% to about 5.0%
- Fruit flavor, artificial: about 0.1%
- Fruit flavor, natural WONF: about 1.25%
- Color: about 0.01% or to specifications
- Potassium sorbate: about 0.1%

Citric acid added to get pH in the range of about 3.7 to about 4.2.

CaCl₂ and certain food grade phosphates are also used in several fruit preparations. The soluble solids range from about 60% to about 65% and viscosity is standard to 5±1.5 Bostwick units (cm), 30 second reading at 24°C. Standard plate counts on the fruit bases are generally less than 55/g. Coliform count, yeast and mold count is less than 10/g. The fruit flavors vary in popularity in different parts of the country and during different times of the year. In general, more popular fruits are: strawberry, rasberry, blueberry, peach, cherry, orange, lemon, purple plum, boysenberry, spiced apple, apricot and pineapple. Blends of these fruits are also popular. Fruits used in yogurt base manufacture may be frozen, canned, dried or combinations thereof. Among the frozen fruits are: strawberry, rasberry, blueberry, apple, peach, orange, lemon, cherry, purple plum, blackberry and cranberry. Canned fruits are: pineapple, peach, mandarin orange, lemon, purple plum and maraschino cherry. The dried fruit category includes apricot, apple, and prune. Fruit juices and syrups are also incorporated in the bases. Sugar in the fruit base functions in protecting fruit flavor against loss volatilization and oxidation. It also balances the fruit and the yogurt flavor. The pH control of the base is important for fruit color retention. The color of yogurt should represent the fruit color in intensity, hue and shade. The base should be stored under refrigeration to retain optimum flavor and to extend shelf life.

The yogurt starter or first culture is a critical ingredient in yogurt manufacture with important consequnces for texture and flavor. For the practical aspects of yogurt culture, *see* Tramer (1973) and David (1975). Freedom from contaminants, vigorous growth in the yogurt mixture, good flavor, body and texture production and a reasonable resistance to phages and antibiotics are primary requirements of yogurt starter. Equal cell numbers of *Lactobacillus bulgaricus* and *Strep**tococcus thermophilus* are desirable for flavor and texture production. The lactobacilli grow first liberating amino acids, glycine and histidine, stimulating the growth of streptococci (Bautista *et* *al.,* 1966). Tramer (1973) demonstrated differences in the comparative acid production ability of various strains of yogurt starters in commercially autoclaved versus heat-treated (95°C for 30 minutes) milk. The rate of acid production by the yogurt starter should be synchronized with plant production schedules. Using frozen yogurt starter concentrates, incubation period of 5 hours at 45°C, 11 hours at 32°C and from 14 to about 16 hours at 29°C to about 30°C is required for yogurt acid development. Using bulk yogurt starters at a 1% inculum level (that is, 1 part yogurt starter for every 100 parts of the mixture to which it is added) the period is about 2.5 to about 3.0 hours at about 45°C, 8 to about 10 hours at 32°C and 14 to about 16 hours at 29°C-30°C (Yeager 1973). Stone *et al.* (1975) reported that milk, UHT pasteurized at temperatures from about 115.6°C to about 157.2°C and a holding time of 0.02 seconds, exhibited higher starter activity in comparison with vat pasteurized milk.

The production of flavor by the yogurt starter is a function of time as well as sugar content of the yogurt mixture. Gorner et al. (1968) reported that acetaldehyde production in yogurt takes place predominantly in the first 1 or 2 hours of incubation; eventually, 23 to about 55 ppm of acetaldehyde is found in yogurt. Hamdan *et* *al.* (1971) reported acetaldehyde levels of 22 to about 26 ppm in their cultures at the fifth hour of incubation, which declined in later stages of incubation. Yogurt flavor is typically ascribed to the formation of lactic acid, acetaldehyde, acetic acid and diacetyl.

The milk coagulum during yogurt production results from an increase in acidity due to the activity of the yogurt starter. The streptococci are responsible for increasing the acidity of yogurt mix to the range of about pH 5.5 to about pH 5.0 and the lactobacilli are primarily responsible for further increasing of acidity to pH 4.4 approximately. Attempts have been made to improve the viscosity and to prevent syneresis of yogurt by including a slime producing strain of *Streptococcus filant* or *Streptococcus bactis* variety *hollandicus* (Galisloot and Hassing 1968; Busch-Johannsen *et al.* 1971; Tramer 1973). The texture of yogurt tends to be coarse or grainy if it is allowed to develop firmness prior to stirring or if it is disturbed at acidity values higher than pH 4.6. Rennet addition to the yogurt mixture, excessive whey solids use and incomplete blending of the mixture's ingredients are additional causes of a coarse texture. Homogenization treatment and fat content tend to favor smooth texture. Gassiness in yogurt may be attributed to defects in yogurt starters or contamination with spore forming Bacillus species, coliforms or yeasts, producing excessive CO₂ and hydrogen. In comparison with plate-type heat exchangers, cooling with tube-type heat exchangers cause less damage to yogurt structure (Mana 1973). Further, loss of viscosity of yogurt may be minimized by well designed booster pumps, metering units and valves involved in yogurt packaging.

The acidity of ordinary yogurt during storage continues to increase from about pH 4.62 to about pH 4.15 in about 6 days of storage at 4°C (Gavin 1965). High storage temperatures accelerate the increase in acidity.

Most yogurt manufacturers incorporate from 5% to about 7% sucrose in their yogurt mixture prior to culturing. Tramer (1973) reported that various strains of yogurt cultures responded differently to various levels of sucrose. No inhibition of culture activity was noticed up to 5.5% sucrose concentrations. At higher sucrose levels, acid production by the yogurt starter was partially inhibited. This effect was primarily ascribed to the stress on lactobacilli and was related to the total solids level in yogurt. Total solids, consisting of milk solids and sweeteners, above a level of 22% inhibit *lactobacillus bulgaricus.*

The inhibition of yogurt starter is also caused by antibiotic residues in milk. Mocquot and Hurel (1970) reported that both *Streptococcus ther**mophilus* and *Lactobacillus bulgaricus* are affected by 0.005 IU/ml of penicillin, 0.066 IU/ml of aureomycin and 0.38 IU/ml of streptomycin. *Strep**tococcus thermophilus* is exceedingly sensitive to penicillin. It is affected at 0.01 IU/ml and yogurt production ceases at 0.03 IU/ml.

Phages are not a practical threat to yogurt making if frozen yogurt starters are used and proper rotation is practiced along with high sanitation standards in the plant. Phages for yogurt cultures, however, have been isolated (Reinhold and Reddy 1973; Kosikowski 1977). Hypochlorites and quarternary ammonium compounds also inhibit yogurt cultures (Bouchez and van Bellegham 1971).

Pasteurization or heat treatment of the raw milk at 85°C for 30 minutes, or its equivalent, is an important step in the manufacture of yogurt so that the product is sterilized and any undesirable bacteria are eliminated. The heat treatment a) produces a sterile medium for the exclusive growth of the yogurt starter b) removes air from the medium to produce a more conducive medium for microaerophilic lactic cultures to grow; c) effects thermal breakdown of milk constituents, especially proteins, releasing peptones, sulfhydryl groups which provide nutrition and anaerobic effects for the yogurt starter; and d) denatures and coagulates milk albumins and globulins which enhance the viscosity and produce custard-like consistency in the product.

It should be noted, however, that according to one embodiment of my invention, the heat treatment step is not employed. Instead of pasteurizing the milk, the action of the various microbes is used to destroy those microorganisms harmful to mankind. Homogenization also aids in the texture development and, additionally, it alleviates the surface creaming and wheying off problem. lonic salt balance in milk is also involved in the wheying off problem.

Plain yogurt normally contains no added sugar or flavors to offer the consumer natural yogurt flavor for consumption as such or an option of flavoring with other food materials of the consumer's choice. In addition, it may be used for cooking or for salad preparation with fresh fruits preferred by the consumer. Also, the size and type of the package may be geared to the market demand, however, wax coated cups as well as plastic cups and lids are the chief packaging materials used in the industry.

Multi-cultured yogurt may be produced by adding one additional step to the normal yogurt-making process; that is adding a minimum of 1% (that is, 1 part culture for every 100 parts yogurt) *Bifidobacterium bifidum,* such as Eugalen Forte supplied by Bio-Nutritional Products of Harrison, New York, up to approximately 5% (5 parts culture for every 100 parts yogurt), to the yogurt product previously cultured to increase the acidity by an additional pH .5 approximately. It should be noted that lower pH increases shelf life by a factor of two. The time required shall be determined by acidity level and shall be suitably sufficient to produce a palatable and healthful product.

*L. acidophilus* may be used in combination with *Bifidobacterium bifidum.* Using *L. acidophilus* singly, however, simply modifies the flavor to a sharper taste. Additional culturing with *Bifidobac**terium bifidum* alone produces a sweeter flavor than *L. acidophilus* or *L. acidophilus* in combination with *Bifidobacterium bifidum,* and also adds protection against yeast formation.

In addition, *Bifidobacterium bidifum* is an anaerobic bacteria with specialized qualities discovered by Japanese scientists. *Interactions* *between Bifidobacterium bidifum N 4 and* *Escherichia Coli K-12 in their Mixed Cultures* by Euchi Hara, Koihei Yazawa, Hiroshi Nakamura, and Zenzo Tamura, Faculty of Pharmaceutical Sciences, University of Tokyo, August 21, 1978, summarizes:

"The interactions between Bifidobacterium bifidum N4 (B. bifidum) and Escherichia K-12 (E. coli) were investigated in their mixed cultures.

Under conditions in which both bacteria grew well in their pure culture, B. bifidum inhibited the growth of E. coli even when the latter was inoculated at 10⁴ fold and preincubated for 41 hours. The inhibition in the mixed cultures appeared when the pH values were reduced below 4.6..."

*Selective Localization and Growth of Bifidobac**terium bifidum in Mouse Tumors Following* *Intravenous Administration,* by Moritaka T. Kimura, Shun'ichiro Taniguchi, Ken Aoki, and Tsuneo Baba, Kyushu University, Japan, June, 1980, offers the following:

"A strain of domestic bacteria, Bifidobacterium bifidum (Lac B), which is nonpathogenic and anaerobic, selectively localized and proliferated in several types of mouse tumors following i.v. administration. None of the same bacilli could be detected in the tissues of healthy organs such as the liver, spleen, kidney, lung, blood, bone marrow, and muscle 48 or 96 hrs. after i.v. administration into tumor-bearing mice."

*Bifidobacterium bifidum,* moreover, constitutes 99% of the intestinal flora of the healthy nursing infant, according to *Role of Dietary Lactobacilli in* *Gastrointestinal Microecology,* by Khem M. Shahani and Amadu D. Ayebo, Department of Food Science and Technology, University of Nebraska, published as paper No. 6050, Journal Series, Nebraska Agricultural Experiment Station. The reported research was conducted under project No. 16-026, supported in part by a grant from the National Dairy Council.

A multi-cultured food product made with *Bifidobacterium bifidum* for a secondary culturing is recommended because of the certainty that such bacteria, cultured at 37°C, normal human body temperature, will dominate bacteria cultivated at 21°C. The use of multi-cultured yogurt containing *Bifidobacterium bifidum,* however, should adequately culture the plain yogurt because *Bifidobacterium bififum* cultures at 37°C whereas plain yogurt bacteria culture at about 40.5°C to about 45.5°C in normal usage. The bacteria used in culturing plain yogurt will not implant in the human digestive tract because the required temperature is too high.

In one embodiment of the present invention whole milk was fermented with a 1% *Bifidobac**terium bifidum* culture at 37°C for 48 hours. This embodiment produces some unusual results. Culturing with *B. Bifidum* yields a dairy product similar to buttermilk in consistency but having a very sweet taste with a curd such smaller than expected. Two containers of whole milk, one fresh and the other stale, were used. After 24 hours the bacteria in the stale ingredients overwhelmed the *B. bifidum* bacteria and reduced the sweet taste.

The 48 hour fermentation time may be a disadvantage in a commercial dairy plant. Single culturing with *B. bifidum* will also work with dairy ingredients other than whole milk and therefore this embodiment is not so limited. It is also within the scope of this invention to make a *B. bifidum* yogurt by substituting *B. bifidum* for *L. bulgaricus* and/or *S*. *thermophilus* and/or any other suitable bacteria or bacterium.

*Bifidobacterium bifidum, L. acidophilus* and yogurt bacteria all produce lactase in the process of souring. Additional souring beyond the norm for a cultured product does not simply increase lactase; it does more. As described hereinabove, the additional fermentation step improves flavor in buttermilk, yogurt, solid spread or cottage cheeese, as usually produced. The further culturing of commercial buttermilk with *Bifidobac**terium bifidum* is considered unique. The yogurt may be turned into a spread by increasing the amount of solids to something like 50%. Otherwise, the multi-cultured yogurt is the same as described.

This invention also relates to cottage cheese made by substituting a double-cultured dairy product comprised of *B. bifidum* or *L. acidophilus* having the consistency of buttermilk to cottage cheese curd during the creaming operation, rather than some form of sweet skimmed milk, sweet cream, or sweet milk, either condensed or not condensed.

As stated, in processing, the pH should be reduced by .5 approximately. However, the pH reduction in plain yogurt by any significant amount by re-culturing represents the breaking down of more lactose, a major factor in this invention.

Wilcox (1971) reviewed the processes for making yogurt with polyunsaturated corn oil, instant yogurt and yogurt enriched with vitamin C.

Soft serve yogurt, hard packed yogurt and novelty items based upon yogurt are relatively new products getting an enthusiastic response by the consumer. Push-ups, frozen yogurt on a stick, skippy cups and tetrapaks are being manufactured and marketed.

The frozen yogurt base mix may be manufactured in a cultured dairy plant and shipped to a soft serve operator or an ice cream plant. Alternatively, the mix may be prepared and frozen in an ice cream plant. The following formulation is generally used: milk fat in the range of about 1.5% to about 2.0%, MSNF in the range of about 13% to about 15%, 250 Bloom gelatin in the range of about 0.15% to about 0.20%, sucrose in the range of about 7% to about 10% and corn syrup solids (24-26 DE) in the range of about 4% to about 5%. These ingredients (except one half of the sugar) are standardized in a blend tank and pasteurized at 88°C for 40 minutes. The mixture is then homogenized at a temperature in the range of about 58°C to about 63°C at 1500 psi, then cooled to 44°C. Yogurt culture is then inoculated and incubation of the mixture is continued until pH 3.9 is attained. The yogurt mixture is then cooled to 25°C and the remaining sugar and fruit are then blended. Special fruit preparations designed for frozen yogurt are used at a level of about 15% to about 20%. This mixture is then frozen in an ice cream freezer at about 50% to about 60% overrun, packed and hardened similar to ice cream. To obtain a soft serve product, a soft serve freezer is used at a draw temperature of -8°C.

A quality control program for yogurt manufacture includes the control of product flavor, body, texture, color, process and composition. The flavor defects are generally described as too intense, too weak or unnatural. The sweetness level may be excessive, weak or may exhibit corn syrup flavor. The flavor may be too tart, weak or atypical. The ingredients used may impart undesirable flavors like stale, metallic, old ingredients, oxidized, rancid or unclean. Lack of control in processing procedures may cause overcooked, caramelized or too tart flavor. Proper control of processing parameters and ingredient quality insures good flavor.

In hard pack frozen yogurt, a coarse and icy mixture may be caused by storage temperature fluctuations. Sandiness may be due to lactose crystals resulting from too high levels of milk solids or whey solids. A soggy or gummy defect is caused by too high a MSNF level or a too high sugar content. A weak body results from too high an overrun end insufficient total solids.

Color defects may be caused by the lack of intensity or authenticity of hue and shade. Proper blending of fruit purees and yogurt mixture is necessary for uniformity of color. The compositional control tests are: fat, moisture, pH, and overrun (for frozen yogurt) and microscopic examination of yogurt starter to insure a ratio of 1:1 in *Lactobacillus bulgaricus* and *Streptococcus* *thermophilus.* Good microbiological quality of all ingredients is necessary. As a guideline, raw milk and cream should contain less than 500,000 and 800,000 bacteria/ml, respectively. Pasteurized fluid dairy products should not exceed 50,000 counts/g or ml. Coliform counts for pasteurized products should not exceed 10/g or ml. Also periodic checks for yeast and mold counts on fruit preparations would be useful.

Although the invention is described in terms of particular ingredients and in what is conceived to be the most practical and preferred method, it is recognized that departures made that fall within the scope of this invention, which is not to be limited to the details disclosed herein but is to be accorded the full scope of the claims so as to embrace any and all equivalent ingredients and methods, including other starters used in cultured products, such as S. lactis, S. cremoris, L. citrovorum, S. diacetilactis and S. durans to achieve maximum reduction of pH which improves keeping qualities because many bacteria cannot survive a low pH.

## Claims

1. A method of producing a multi-cultured food product which comprises:
a. producing separately a first culture wherein said culture comprises Lactobacillus bulgaricus or Streptococcus thermophilus;
b. producing separately a second culture wherein said culture comprises Bifidobacterium bifidum or Lactobacillus acidophilus;
c. mixing in a mixing tank cream, milk, partially skimmed milk and skim milk, alone or in combination where concentrated skim milk, non-fat dry milk or other milk derived ingredients are used to standardize milk-solids-to-fat;
d. treating the mixture of step (c) so as to produce a pasteurized prepared mixture at a fermentation temperature in the range of about 40°C to about 50°C;
e. inoculating the prepared mixture with the first culture to produce a prepared milk fluid;
f. fermenting the prepared milk fluid at a temperature in the range of about 40°C to about 50°C for a time sufficient enough that an amount of lactic acid is generated to produce a first fully cultured product;
g. cooling the first cultured product to a temperature in the range of about 35°C to about 39°C;
h. inoculating the cooled first cultured product with the second culture to produce a second cultured product; and
i. fermenting the second cultured product for a time sufficient to reduce the pH by about 0.5 and produce a palatable and healthful multi-cultured food product

2. The method of claim 1, wherein the first culture comprises equal cell counts of Lactobacillus bulgaricus and Streptococcus thermophilus.

3. The method of claim 2, further comprising adding fruit preparation.

4. The method of claim 3 further comprising blending thoroughly the fruit preparation in the food product after the second culturing.

5. The method of claim 1, wherein the ingredients of step (c) are derived from certified milk and step (d) is eliminated to the extent that the mixture does not undergo a pasteurization heating.

6. The method of claim 2, further comprising adding milk solids to the mixture of step (c) so that said mixture has a consistency between sour cream and butter.

7. The method of claim 1, wherein the fermentation of the second cultured product takes place at a temperature in the range of about 36°C to about 38°C.

8. A method of producing a frozen multi-cultured food product which comprises:
a. preparing a preliminary first culture wherein said culture comprises Lactobacillus bulgaricus or Streptococcus thermophilus;
b. preparing separately a second culture wherein said culture comprises Bifidobacterium, Lactobacillus (except Lactobacillus bulgaricus), or lactic acid producing micro-organism.
c. mixing milk fat, milk-solids-not-fat, gelatin, sucrose and corn syrup solids to produce a mixture;
d. blending the mixture;
e. pasteurizing the blended mixture;
f. cooling the pasteurized blended mixture to a temperature in the range of about 58°C to about 63°C;
g. homogenizing the mixture of step (f) to produce a precursor;
h. cooling the precursor to a temperature in the range of about 40°C to about 45°C;
i. inoculating the cooled precursor with the first culture to produce a product;
j. fermenting the first product for a time sufficient enough that an amount of lactic acid is generated to produce a preliminary first fully cultured product;
k. cooling the first cultured product to a temperature in the range of about 35°C to 39°C;
l. inoculating the cooled first cultured product with the second culture to produce a second cultured product;
m. fermenting the second cultured product for a time sufficient enough that the pH is reduced by about 0.5 to produce a multi-cultured food product; and
n. freezing the multi-cultured food product to a suitable hardness to produce a frozen multi-cultured food product.

9. A cultured dairy product containing Bifidobacterium Bifidum or Lactobacillus Acidophilus, which is obtainable by fully culturing a milk product in each of two culturing steps, wherein Bifidobacterium Bifidum or Lactobacillus acidophilus is used as a culturing organism in the second culturing step to reduce the pH by about 0.5.

10. A method of producing a multi-cultured cottage cheese which comprises:
a. producing a starter culture wherein said culture comprises Streptococcus lactis, Streptococcus cremoris, Streptococcus diacetilactis or a micro-organism of the Leuconostoc species;
b. heating pasteurized skim milk to about 32°C in a vat;
c. inoculating the heated pasteurized skim milk with the starter culture and rennet to produce a first cultured product;
d. fermenting the first cultured product for a time sufficient enough to produce a curd with an optimum pH measurement;
e. cutting the fermented first cultured product to produce a curd and whey mass;
f. heating the curd mass and whey to a cooking temperature in the range of 54°C to about 58°C;
g. cooking the curd mass and whey at the cooking temperature for a time sufficient enough to achieve a desired firmness;
h. draining of the whey;
i. washing the curd mass with fresh water to remove all whey;
j. trenching the curd while draining a final wash;
k. creaming the washed curd with a cream dressing comprised of a double-cultured dairy product of claim 9 having
B. bifidum or L. acidophilus to produce cottage cheese.

11. A cultured dairy product as claimed in claim 9 which is buttermilk, the buttermilk having been fully cultured in a first culturing step by use of Streptococcus lactis, Streptococcus cremoris, Leuconostoc citrovorum, Streptococcus diacetilactis, or Streptococcus durans as culturing organism.

12. A cultured buttermilk dairy product as claimed in claim 11, wherein the culturing organism in the second culturing step is Bifidobacterium bifidum.

## Patentansprüche

1. Verfahren zum Herstellen eines multi-kultivierten Lebensmittelerzeugnisses, wobei man
a) getrennt eine erste Kultur herstellt, wobei diese Kultur Lactobacillus bulgaricus oder Streptococcus thermophilus enthält;
b) getrennt eine zweite Kultur herstellt, wobei diese Kultur Bifidobacterium bifidum oder Lactobacillus acidophilus enthält;
c) Rahm, Milch, teilweise entrahmte Milch und Magermilch, einzeln oder in Kombination in einem Mischtank mischt, wo konzentrierte Magermilch, nicht fetthaltige Trockenmilch oder andere von Milch herstammende Bestandteile verwendet werden, um Milchtrockenmasse zu Fettgehalt zu standardisieren;
d) die Mischung der Stufe c) in der Weise behandelt, daß man eine pasteurisierte, zubereitete Mischung bei einer Fermentierungstemperatur im Bereich von etwa 40°C bis etwa 50°C erzeugt;
e) die zubereitete Mischung mit der ersten Kultur impft, um eine zubereitete Milchflüssigkeit zu erzeugen;
f) die zubereitete Milchflüssigkeit bei einer Temperatur im Bereich von etwa 40°C bis etwa 50°C solange fermentiert, bis eine Menge an Milchsäure gebildet wird, um ein erstes komplett kultivlertes Erzeugnis herzustellen;
g) das erste Kultur-Erzeugnis auf eine Temperatur im Bereich von etwa 35°C bis etwa 39°C abkühlt;
h) das gekühlte, erste Kultur-Erzeugnis mit der zweiten Kultur impft, um ein zweites Kultur-Erzeugnis herzustellen; und
i) wobei man das zweite Kultur-Erzeugnis solange fermentiert bis der pH-Wert um etwa 0,5 reduziert wird und ein schmackhaftes und gesundheitsförderndes Multi-Kultur-Lebensmittel hergestellt ist.

2. Verfahren nach Anspruch 1, wobei die erste Kultur eine gleiche Anzahl an Zellen von Lactobacillus bulgaricus und Streptococcus thermophilus enthält.

3. Verfahren nach Anspruch 2, wobei man desweiteren eine Fruchtzubereitung zugibt.

4. Verfahren nach Anspruch 3, wobei man desweiteren die Fruchtzubereitung in dem Lebensmittelerzeugnis nach dem zweiten Kulturschritt gründlich mischt.

5. Verfahren nach Anspruch 1, wobei die in Stufe c) eingesetzten Bestandteile sich von Vorzugsmilch ableiten und die Stufe d) bis zu einem Umfang eliminiert wird, daß die Mischung nicht einer Pasteurisationserwärmung ausgesetzt wird.

6. Verfahren nach Anspruch 2, wobei man zusätzlich Milchtrockenmasse zu der Mischung der Stufe c) in der Weise zugibt, daß diese Mischung eine Konsistenz zwischen Sauerrahm und Butter aufweist.

7. Verfahren nach Anspruch 1, wobei die Fermentierung des zweiten Kultur-Erzeugnisses bei einer Temperatur im Bereich von etwa 36°C bis etwa 38°C verläuft.

8. Verfahren zum Herstellen eines gefrorenen, multi-kultivierten Lebensmittelerzeugnisses, wobei man
a) eine vorläufige erste Kultur herstellt, wobei diese Kultur Lactobacillus bulgaricus oder Streptococcus thermophilus enthält;
b) getrennt eine zweite Kultur herstellt, wobei diese Kultur Bifidobacterium, Lactobacillus (außer Lactobacillus bulgaricus) oder einen Milchsäure erzeugenden Mikroorganismus enthält;
c) Milchfett, fettfreie Milchtrockenmasse, Gelatine, Saccharose und Maissirupstoffe mischt, um eine Mischung herzustellen;
d) die Mischung durchmischt;
e) die durchmischte Mischung pasteurisiert;
f) die pasteurisierte Mischung auf eine Temperatur im Bereich von etwa 58°C bis etwa 63°C abkühlt;
g) die Mischung der Stufe f) homogenisiert, um eine Vorstufe herzustellen;
h) die Vorstufe auf eine Temperatur im Bereich von etwa 40°C bis etwa 45°C abkühlt;
i) die abgekühlte Vorstufe mit der ersten Kultur impft, um ein Produkt herzustellen;
j) das erste Produkt eine ausreichende Zeitlang fermentiert, damit eine Menge an Milchsäure gebildet wird, um ein vorläufiges erstes komplett kultiviertes Produkt herzustellen;
k) das erste Kultur-Produkt auf eine Temperatur im Bereich von etwa 35°C bis etwa 39°C abkühlt;
l) das abgekühlte, erste, Kultur-Produkt mit der zweiten Kultur impft, um ein zweites Kultur-Produkt herzustellen;
m) das zweite Kultur-Produkt eine ausreichende Zeit fermentiert, so daß der pH-Wert um etwa 0,5 reduziert wird, um ein Multi-Kultur-Lebensmittelprodukt herzustellen, und
n) wobei man das Multi-Kultur-Lebensmittelprodukt bis zu einer geeigneten Härtestufe einfriert, um ein gefrorenes, multikultiviertes Lebensmittelprodukt herzustellen.

9. Bifidobacterium bifidum oder Lactobacillus acidophilus enthaltendes, kultiviertes Milchprodukt, das man dadurch erhält, daß man ein Milchprodukt in jeder von zwei Kulturstufen komplett kultiviert, wobei Bifidobacterium bifidum oder Lactobacillus acidophilus als Kultivierungsorganismus in der zweiten Kulturstufe verwendet wird, so daß der pH-Wert um etwa 0,5 reduziert wird.

10. Verfahren zum Herstellen eines Multi-Kultur-Frischkäses ("cottage cheese"), wobei man
a) eine Starterkultur erzeugt, wobei diese Kultur Streptococcus lactis, Streptococcus cremoris, Streptococcus diacetilactis oder einen Mikroorganismus der Leuconostoc Species enthält;
b) pasteurisierte Magermilch auf etwa 32°C in einem Trog erwärmt;
c) die erwärmte, pasteurisierte Magermilch mit der Starterkultur und Lab impft, um ein erstes Kultur-Produkt herzustellen;
d) das erste Kultur-Produkt eine ausreichende Zeitlang fermentiert, um Käsebruch mit einem optimalen pH-Wert herzustellen;
e) das fermentierte erste Kultur-Produkt schneidet, um Käsebruch und Molke zu erzeugen;
f) den Käsebruch und die Molke auf eine Kochtemperatur im Bereich von 54°C bis etwa 58°C erhitzt;
g) den Käsebruch und die Molke bei einer Kochtemperatur eine ausreichende Zeitlang kocht, um die gewünschte Festigkeit zu erreichen;
h) die Molke abläßt;
i) die Käsebruchmasse mit frischem Wasser wäscht, um jegliche Molke zu entfernen;
j) den Käsebruch mit Gräben durchzieht, währenddessen die letzte Waschflüssigkeit abgelassen wird;
k) den gewaschenen Käsebruch mit einer Rahmzubereitung, die ein doppelt kultiviertes Milchprodukt nach Anspruch 9 mit Bifidobacterium bifidum oder Lactobacillus acidophilus zur Erzeugung von Frischkäse enthält, aufrahmt.

11. Milchprodukt nach Anspruch 9, das Buttermilch ist, wobei die Buttermilch während einer ersten Kulturstufe komplett kultiviert wird, mit Benutzung von Streptococcus lactis, Streptococcus cremoris, Leuconostoc citrovorum, Streptococcus diacetilactis oder Streptococcus durans als Kultivierungsorganismus.

12. Kultiviertes Buttermilch-Milchprodukt nach Anspruch 11, wobei in der zweiten Kulturstufe Bifidobacterium bifidum als Kultivierungsorganismus benutzt wird.

## Revendications

1. Procédé pour produire un produit alimentaire multicultivé, comprenant:
a. la production séparée d'une première culture dans laquelle ladite culture comprend du Lactobacillus bulgaricus ou du Streptococcus thermophilus;
b. la production séparée d'une seconde culture dans laquelle ladite culture comprend du Bifidobactérium bifidum ou du Lactobacillus acidophilus;
c. le mélange, dans une cuve de mélange, de crème, de lait, de lait partiellement écrémé et de lait écrémé, seuls ou en combinaison, dans lesquels du lait écrémé concentré, du lait en poudre sans matière grasse ou d'autres composants du lait sont utilisés pour normaliser les solides du lait par rapport à la matière grasse;
d. le traitement du mélange de l'étape (c) pour produire un mélange pasteurisé préparé à une température de fermentation dans la gamme d'environ 40°C à environ 50°C;
e. l'inoculation du mélange préparé avec la première culture pour produire un fluide de lait préparé;
f. la fermentation du fluide de lait préparé à une température dans la gamme d'environ 40°C à environ 50°C pendant un temps suffisant pour générer une quantité d'acide lactique afin de produire un premier produit complètement cultivé;
g. le refroidissement du premier produit cultivé à une température dans la gamme d'environ 35°C à environ 39°C;
h. l'inoculation du premier produit cultivé refroidi avec la seconde culture pour produire un second produit cultivé; et
i. la fermentation du second produit cultivé pendant un temps suffisant pour abaisser le pH d'environ 0,5 et pour produire un produit alimentaire multicultivé d'un goût agréable et bon pour la santé.

2. Procédé selon la revendication 1, dans lequel la première culture comprend des comptes égaux de cellules de Lactobacillus bulgaricus et de Streptococcus thermophilus.

3. Procédé selon la revendication 2, comprenant en plus l'addition d'une préparation de fruit.

4. Procédé selon la revendication 3, comprenant en plus le mélange soigneux de la preparation de fruit dans le produit alimentaire après la seconde culture.

5. Procédé selon la revendication 1, dans lequel les ingrédients de l'étape (c) proviennent de lait certifié et que l'étape (d) est éliminée dans la mesure où le mélange ne subit pas de chauffage pour effectuer une pasteurisation.

6. Procédé selon la revendication 2, comprenant en plus l'addition de solides du lait au mélange de l'étape (c), si bien que ce mélange a une consistance comprise entre celle de la crème aigre et du beurre.

7. Procédé selon la revendication 1, dans lequel la fermentation du second produit cultivé a lieu à une température dans la gamme d'environ 36°C à environ 38°C.

8. Procédé pour produire un produit alimentaire multicultivé congelé, comprenant:
a. la préparation d'une première culture préliminaire dans laquelle ladite culture comprend du Lactobacillus bulgaricus ou du Streptococcus thermophilus;
b. la préparation séparée d'une seconde culture dans laquelle ladite culture comprend du Bifidobactérium, du Lactobacillus (à l'exception du Lactobacillus bulgaricus) ou un microorganisme produisant de l'acide lactique;
c. le mélange de graisse de lait, de solides du lait sans matière grasse, de gélatine, de sucrose et de solides de sirop de maïs pour produire un mélange;
d. le mélange du système;
e. la pasteurisation du mélange obtenu;
f. le refroidissement du mélange pasteurisé obtenu à une température dans la gamme d'environ 58°C à environ 63°C;
g. l'homogénéisation du mélange de l'étape (f) pour produire un précurseur;
h. le refroidissement du précurseur à une température dans la gamme d'environ 40°C à environ 45°C;
i. l'inoculation du précurseur refroidi avec la première culture pour produire un produit;
j. la fermentation du premier produit pendant un temps suffisant pour générer une quantité d'acide lactique afin de produire un premier produit complètement cultivé;
k. le refroidissement du premier produit cultivé à une température dans la gamme d'environ 35°C à 39°C;
l. l'inoculation du premier produit cultivé refroidi avec la seconde culture pour produire un second produit cultivé;
m. la fermentation du second produit cultivé pendant un temps suffisant pour que le pH soit réduit d'environ 0,5 afin de produire un produit alimentaire multicultivé; et
n. la congélation du produit alimentaire multicultivé à une dureté convenable pour produire un produit alimentaire multicultivé congelé.

9. Produit laitier cultivé contenant du Bifidobactérium bifidum ou du Lactobacillus acidophilus, pouvant être obtenu par une culture complète d'un produit du lait dans chacune de deux étapes de culture, dans lequel le Bifidobactérium bifidum ou le Lactobacillus acidophilus sont utilisés comme organismes de culture au cours de la seconde étape de culture afin de réduire le pH d'environ 0,5.

10. Procédé pour produire un fromage blanc ("cottage cheese") multicultivé, comprenant:
a. la production d'une culture de démarrage dans laquelle ladite culture comprend du Streptococcus lactis, du Streptococcus cremoris, du Streptococcus diacetilactis ou un micro-organisme de l'espèce Leuconostoc;
b. le chauffage du lait écrémé pasteurisé à environ 32°C dans une cuve;
c. l'inoculation du lait écrémé pasteurisé chauffé avec la culture de démarrage et de la présure pour produire un premier produit cultivé;
d. la fermentation du premier produit cultivé pendant un temps suffisant pour produire un caillé avec une mesure de pH optimum;
e. la découpe du premier produit cultivé fermenté pour produire une masse de caillé et de petit-lait;
f. le chauffage de la masse de caillé et du petit-lait à la température de cuisson dans la gamme de 54°C à environ 58°C;
g. la cuisson de la masse de caillé et du petit-lait à une température de cuisson pendant un temps suffisant pour obtenir une fermeté désirée;
h. l'égouttage du petit-lait;
i. le lavage de la masse de caillé avec de l'eau fraîche pour éliminer tout le petit-lait;
j. le creusement de rigoles dans le caillé alors que s'égoutte un liquide de lavage final;
k. le crémage du caillé lavé avec une sauce à la crème composée d'un produit laitier cultivé deux fois selon la revendication 9, ayant du B. bifidum ou du L. acidophilus, pour produire un fromage blanc.

11. Produit laitier cultivé selon la revendication 9, ce produit étant du babeurre, le babeurre ayant été complètement cultivé au cours d'une première étape de culture en utilisant du Streptococcus lactis, du Streptococcus cremoris, du Leuconostoc citrovorum, du Streptococcus diacetilactis ou du Streptococcus durans comme organisme de culture.

12. Un produit laitier de babeurre cultivé selon la revendication 11, dans lequel l'organisme de culture utilisé au cours de la seconde étape de culture est du Bifidobactérium bifidum.
